# EUROPEAN PATENT APPLICATION

(11) **EP 1 524 162 A1**
(43) Date of publication of application: **20.04.2005**
(21) Application number: 04024387.5
(22) Date of filing: 13.10.2004
(51) Int. Cl.: B60T 7/06, B60K 23/02, G05G 1/14

(54) **Pedal module**

(30) Priority: 17.10.2003 JP 2003358298
(71) Applicant: Nabtesco Corporation, Tokyo (JP); Chiyoda Industry Co. Ltd., Isezaki-shi, Gunma (JP)
(72) Inventor: Okuma, Hiroshi, Tokyo (JP); Tanaka, Akira, Tokyo (JP); Ishihara, Yasushi, Isesaki-shi Gunma (JP); Yamaguchi, Osamu, Isesaki-shi Gunma (JP)
(74) Representative: Müller-Boré & Partner Patentanwälte

(57) **Abstract**

A pedal module (1) adapted to be fixed to a dashboard (10) for separating a vehicle body of an automotive vehicle into a vehicle chamber and an engine room is provided with a pedal (11) which is operable by a stepping operation of a driver of the vehicle, a master cylinder (2) including a cylinder body (4) and a push rod (25) which protrudes through an opening end of the cylinder body (4) and is made reciprocable in an axial direction of the cylinder body (4) in accordance with the stepping operation of the pedal (11) by the driver, and a pedal bracket (3) which is attached to the cylinder body (4) for pivotally mounting the pedal (11) thereon. The cylinder body (4) has an attachment member (5) on an end portion thereof opposite to the opening end in the axial direction of the cylinder body (4), and the attachment member is fixed to the dashboard (10).

## Description

The present invention relates to a pedal module which is fixedly attached to a dashboard for separating a vehicle body of an automotive vehicle into a vehicle chamber and an engine room, and to which a pedal is pivotally attached.

A pedal module is known as shown in FIGS. 8 and 9 (e.g., see Japanese Unexamined Patent Publication No. HEI 6-219327). The pedal module has a pedal bracket 101 which is attached to a dashboard 100 on the side of a vehicle chamber. A clutch pedal 102 and a brake pedal 103 are attached to the pedal bracket 101 on the side of the vehicle chamber. A clutch master cylinder 104 and a brake master cylinder 105 are attached to the dashboard 100 on the side of an engine room.

In the above arrangement, since the master cylinders 104 and 105 project in the engine room, a layout is restricted in light of a positional relation of these members to other equipment in the engine room.

As an improved arrangement, there is proposed an arrangement in which a master cylinder 111 is also attached to a dashboard 110 on the side of a vehicle chamber as shown in FIG. 10 (e.g., Japanese Unexamined Patent Publication No. 2002-178893).

In the above arrangement, since the entirety of the pedal module is attached to the dashboard 110 on the side of the vehicle chamber, there is no restriction on layout. In this arrangement, the master cylinder 111 and a pedal bracket 112 are interlocked to each other as the pedal module to facilitate mounting operation of the pedal module in the vehicle body.

In such pedal module as disclosed in Japanese Unexamined Patent Publication No. 2002-178893, as shown in FIG. 10, the pedal bracket 112 is a first element to be mounted on the dashboard 110. Specifically, first, the pedal bracket 112 is fixedly attached to the dashboard 110 on the side of the vehicle chamber, followed by attaching a clutch pedal 114, the master cylinder 111, and a mechanism 113 for reducing a stepping force of the pedal onto the pedal bracket 112. In view of this, a relatively large pedal bracket is required, which may increase the pedal module in size and weight.

It is an object of the present invention to provide a pedal module which is free from the problems residing in the prior art.

It is another object of the present invention to provide a pedal module which has a reduced size and lightweight.

According to an aspect of the present invention, a pedal module, which is fixedly attached to a dashboard for separating a vehicle body of an automotive vehicle into a vehicle chamber and an engine room, is provided with a pedal to be steppedly operated by a driver at the vehicle, a master cylinder including a cylinder body and a push rod, and a pedal bracket attached to the cylinder body for pivotally mounting the pedal. The push rod protrudes through an opening end of the cylinder body and is reciprocatingly moved in axial directions of the cylinder body in accordance with the stepping of the driver against the pedal. The cylinder body has an attachment member on an end portion of the cylinder body opposite to the opening end in the axial direction of the cylinder body. The attachment member is fixedly attached to the dashboard.

These and other objects, features and advantages of the present invention will become more apparent upon reading of the following detailed description along with the accompanying drawings, in which:
FIG. 1 is a front view of a pedal module to be used for a clutch pedal and its peripheral parts according to an embodiment of the invention.
FIG. 2 is a right side view of the pedal module as shown in FIG. 1.
FIG. 3 is a plan view of the pedal module as shown in FIG. 1.
FIG. 4 is a rear view of the pedal module as shown in FIG. 1.
FIG. 5 is an exploded perspective view of the pedal module as shown in FIG. 1, as viewed from diagonally forward right.
FIG. 6 is an exploded perspective view of the pedal module as shown in FIG. 1, as viewed from diagonally forward left.
FIG. 7 is a front view of a pedal module according to another embodiment of the invention.

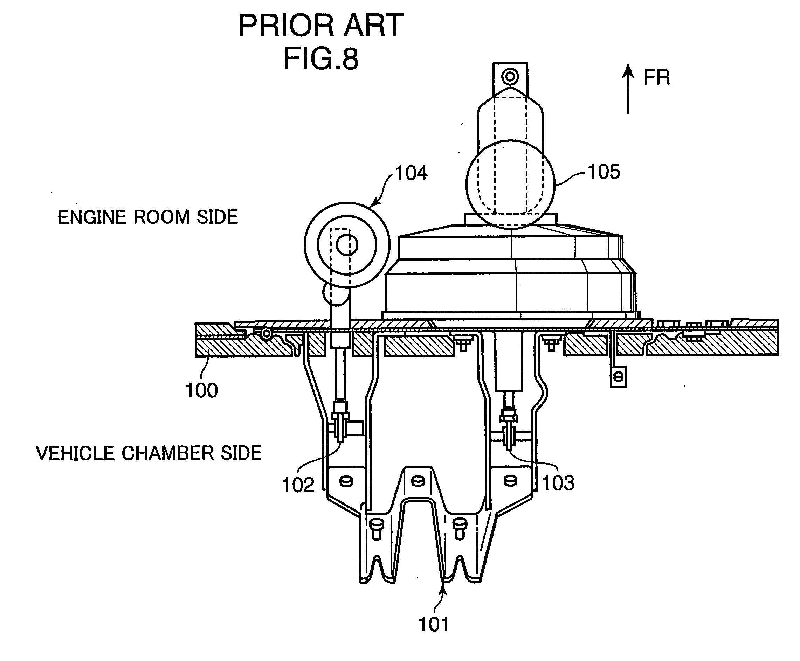

FIG. 8 is a plan view of a conventional pedal module.

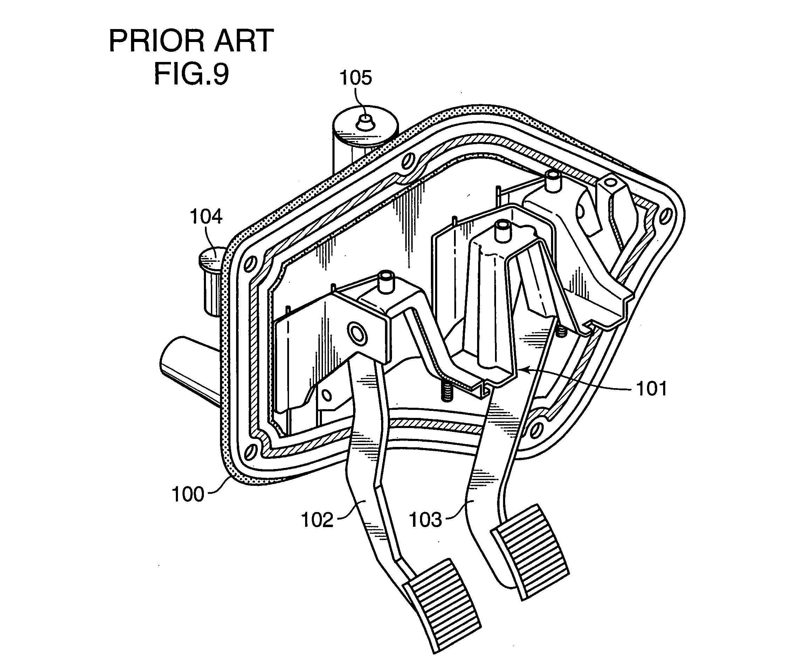

FIG. 9 is a perspective view of the conventional pedal module.

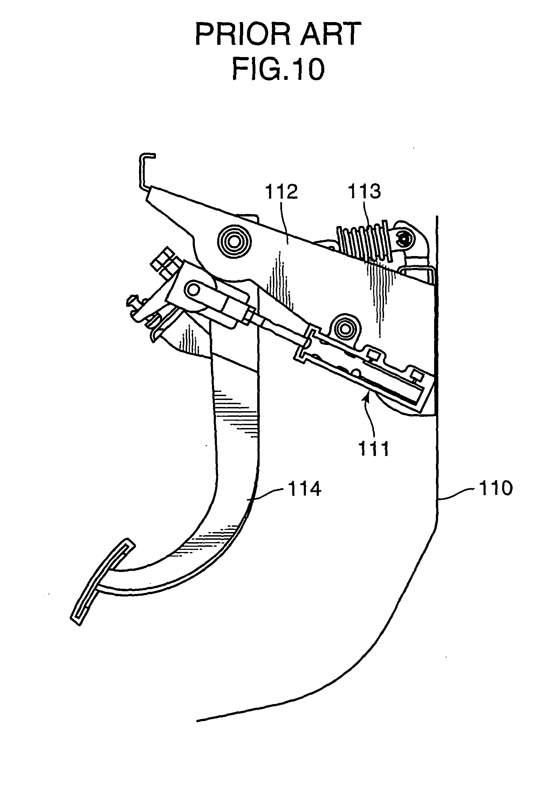

FIG. 10 is a front view of another conventional pedal module.

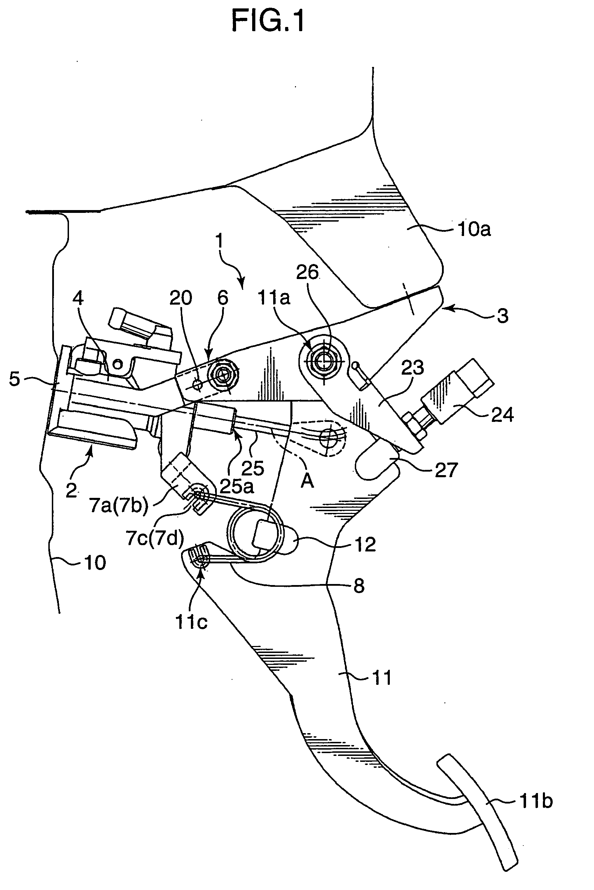

Referring to FIG. 1, a pedal module 1 to be used for a clutch pedal includes a clutch pedal 11, a master cylinder 2, and a pedal bracket 3. The master cylinder 2 and the pedal bracket 3 are fixedly attached to a dashboard 10 for separating a vehicle body of an automotive vehicle into a vehicle chamber and an engine room, and an instrument panel 10a mounted on the dashboard 10, and the clutch pedal 11 is pivotally mounted on the pedal bracket 3.

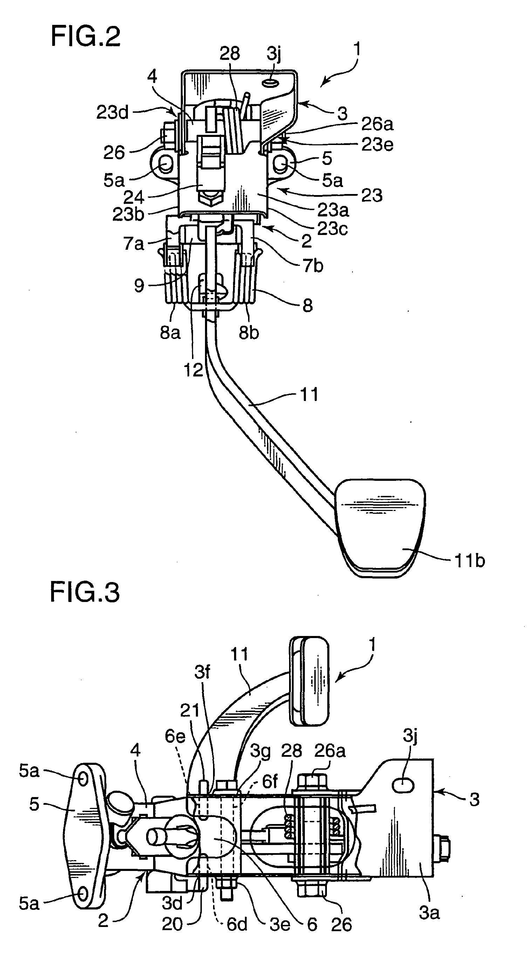

The master cylinder 2 has a cylinder body 4 formed with a cylinder hole through which a piston is reciprocatingly moved. The cylinder hole extends in the axial direction A of the cylinder body 4, so that the piston is reciprocatingly moved in the cylinder hole in the axial directions A. A bracket or attachment member 5 to be fixedly attached to the dashboard 10 is provided on an axially forward end portion of the cylinder body 4. As shown in FIG. 2, the bracket 5 is formed with bolt receiving holes 5a, 5a for passing bolts (not shown). The master cylinder 2 is fixedly attached to the dashboard 10 by screwing the bolts in the dashboard 10. As shown in FIG. 1, a connecting portion 6 is provided on an axially rear end portion of the cylinder body 4 to support the pedal bracket 3 fixedly attached to the dashboard 10. Support portions 7a, 7b are integrally formed with a lower rear end portion of the cylinder body 4 to support both ends of an assist spring 8, respectively. A contact portion 9 is formed between the support portions 7a and 7b. A stopper 12 for defining a stepping degree of the clutch pedal 11, which will be described later, is allowed to come into contact with the contact portion 9.

The connecting portion 6 protrudes rearwardly from the cylinder body 4, as shown in FIGS. 3, 5, and 6. Pin receiving holes 6d, 6e are formed in widthwise both ends of the connecting portion 6, respectively. The pin receiving holes 6d, 6e are horizontally aligned to each other and each has a predetermined depth. These pin receiving holes 6d, 6e are arranged co-axially to each other. A horizontally extending through-hole 6f is formed in a rear end portion of the connecting portion 6 rearwardly of the pin receiving holes 6d, 6e.

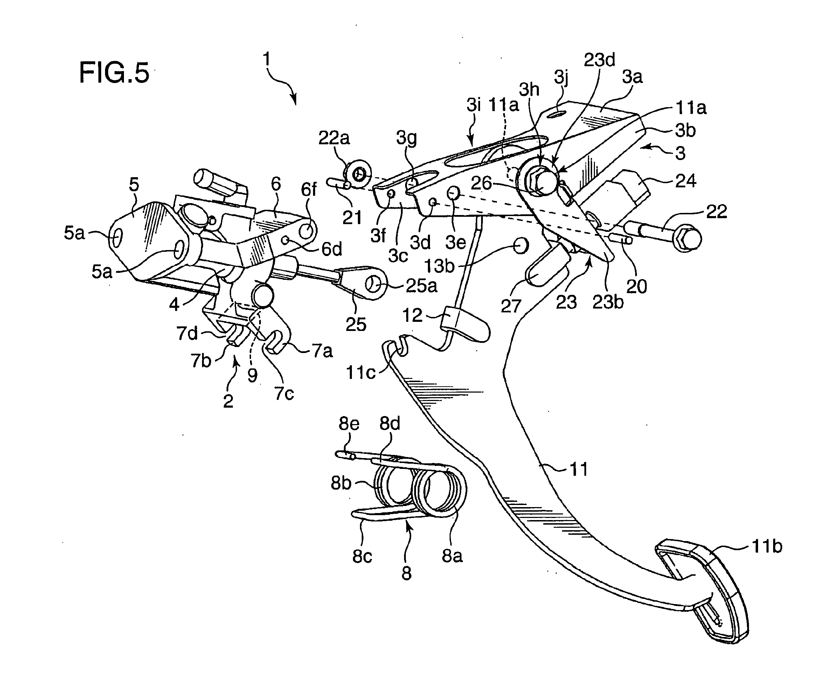

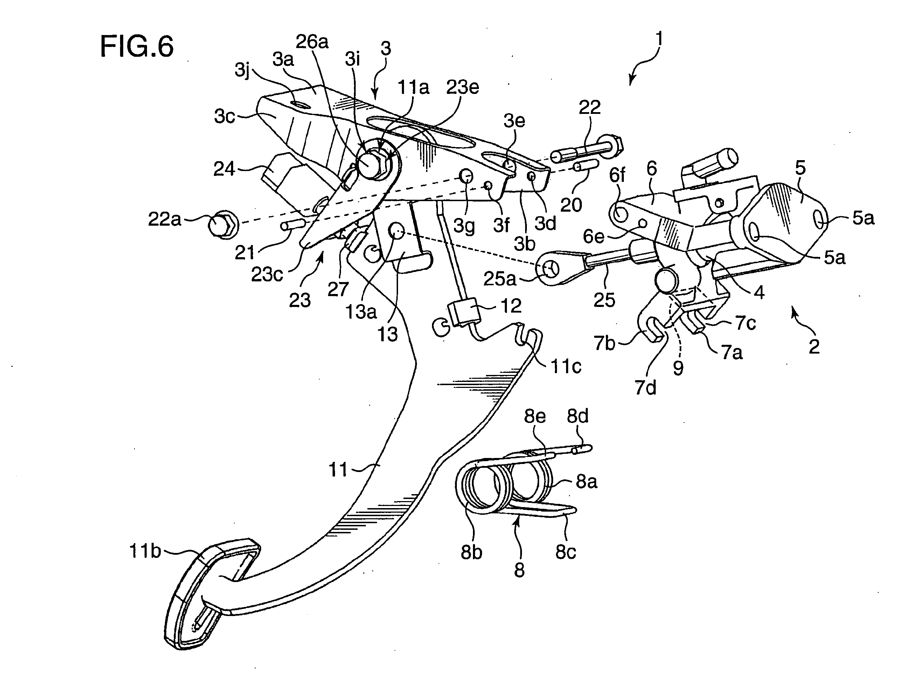

As shown in FIGS. 5 and 6, the pedal bracket 3 has an upper portion 3a, and two side portions 3b, 3c extending from widthwise both ends of the upper portion 3a. The pedal bracket 3 has a substantially U-shape in cross section. Attachment holes 3d, 3e are formed in a forward portion of the side portion 3b in such a manner that they are spaced apart from each other by a predetermined distance in the longitudinal direction of the pedal bracket 3. Likewise, attachment holes 3f, 3g are formed in a forward portion of the side portion 3c in such a manner that they are spaced apart from each other by a predetermined distance in the longitudinal direction of the pedal bracket 3. A bolt receiving hole 3j for receiving a bolt (not shown) is formed in a rear end portion of the upper portion 3a to fixedly attach the rear end portion of the pedal bracket 3 to the instrument panel 10a.

As shown in FIGS. 5 and 6, a pin 20 is passed in the attachment hole 3d formed in the forward portion of the side portion 3b of the pedal bracket 3 and in the pin receiving hole 6d formed in the connecting portion 6 in a state that the positions of the attachment hole 3d and the pin receiving hole 6d are aligned to each other. Likewise, a pin 21 is passed in the attachment hole 3f formed in the forward portion of the side portion 3c of the pedal bracket 3 and in the pin receiving hole 6e formed in the connecting portion 6 in a state that the positions of the attachment hole 3f and the pin receiving hole 6e are aligned to each other. Further, a bolt 22 is passed in the attachment hole 3e formed in the forward portion of the side portion 3b of the pedal bracket 3, in the attachment hole 3g formed in the forward portion of the side portion 3c of the pedal bracket 3, and in the through-hole 6f formed in the connecting portion 6 in a state that the positions of the attachment hole 3e, the attachment hole 3g, and the through-hole 6f are aligned to each other. A nut 22a is mounted to a neck portion of the bolt 22 for fixation. With this arrangement, the pedal bracket 3 is fixedly attached to the connecting portion 6 of the cylinder body 4 at a certain angular position.

As shown in FIG. 1, the clutch pedal 11 and a stopper mounting member 23 are attached to respective appropriate positions in the longitudinal direction of the pedal bracket 3. The clutch pedal 11 is pivotally rotated about an upper end portion thereof. A through-hole 11a is formed in the center of axis of the rotation of the clutch pedal 11. A pad 11b facing rearward is attached to a lower end portion of the clutch pedal 11. A support hole 11c is formed in a forward portion substantially in the middle in the height direction of the clutch pedal 11 to support the assist spring 8 at a mid part thereof. The stopper 12 is attached to the clutch pedal 11 at a certain distance above the support hole 11c. The stopper 12 defines the stepping degree of the clutch pedal 11 by its contact with the contact portion 9. As shown in FIG. 6, a rod attachment member 13 is attached to the upper portion of the clutch pedal 11 in a state that an intermediate portion of the rod attachment member 13 is spaced away from the clutch pedal 11, and vertically opposite end portions (bent portions) thereof are attached to the clutch pedal 11. A push rod 25 for pushing the piston is pivotally attached to the clutch pedal 11 in a state that a lead end portion of the push rod 25 is interposed in the space between the clutch pedal 11 and the intermediate portion of the rod attachment member 13. More specifically, as shown in FIGS. 5 and 6, a bolt (not shown) is passed in an attachment hole 13a formed in the intermediate portion of the rod attachment member 13, in an attachment hole 13b formed in the clutch pedal 11 at a position corresponding to the attachment hole 13a, and in an attachment hole 25a formed in the lead end portion of the push rod 25 in a state that the positions of the attachment holes 13a, 13b, and 25a are aligned to each other. A nut (not shown) is mounted to a neck portion of the bolt for fixation. Thus, the push rod 25 is pivotally attached to the clutch pedal 11. With this arrangement, the clutch pedal 11 and the push rod 25 contract and expand in the reciprocating directions (axial direction A as shown in FIG. 1) of the piston. As the clutch pedal 11 is stepped on, the piston is pushed inside the cylinder hole of the cylinder body 4, namely, in the forward direction of the vehicle. The base end portion of the push rod 25 is received in the interior of the cylinder body 4 through an opening end 25a (see FIG. 1) formed in the rear end portion of the cylinder body 4, with the lead end portion of the push rod 25 protruding through the opening end 25a.

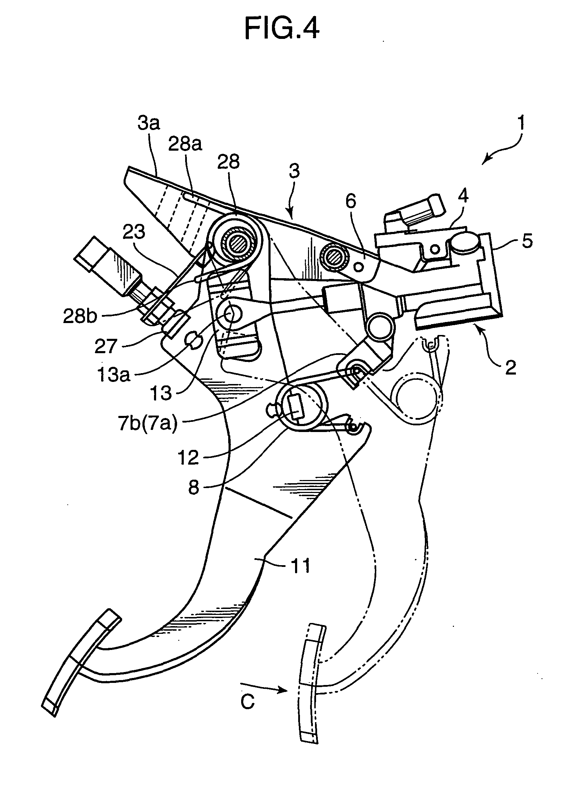

The assist spring 8 is a helical spring produced from a single wire rod, and exerts a torsional force. As shown in FIG. 5, the assist spring 8 has a U-shaped engaging portion 8c between two wound portions 8a, 8b. L-shaped engaging portions 8d, 8e are formed on respective ends of the wound portions 8a, 8b. The assist spring 8 is supported on the master cylinder 2 by engagement of end portions of the L-shaped engaging portions 8d, 8e in the support holes 7c, 7d formed in the support portions 7a, 7b of the cylinder body 4, respectively. The assist spring 8 is also supported on the clutch pedal 11 by engagement of the engaging portion 8c of the assist spring 8 in the support hole 11c formed in the clutch pedal 11. The assist spring 8 assists a stepping operation of the driver of the vehicle by its urging force of urging the clutch pedal 11 in the stepping direction as shown by the arrow C in FIG. 4. The assist spring 8 exerts a restoring force to the clutch pedal 11 to restore the clutch pedal 11 toward an initial position before the pad 11b of the clutch pedal 11 is stepped on during a first half stroke from the initial position of the clutch pedal 11 until the clutch pedal 11 reaches a predetermined stroke, and exerts an assisting force to assist the stepping operation of the driver during a second half stroke from the predetermined stroke until the clutch pedal 11 reaches a deepest stepping position.

As shown in FIGS. 2, 5 and 6, the stopper mounting member 23 has an upper portion 23a, and side portions 23b, 23c extending from widthwise both ends of the upper portion 23a. Each of the side portions 23b, 23c has a protrusion protruding forwardly from the upper portion 23a. Through-holes 23d, 23e are formed in the protrusions of the side portions 23b, 23c, respectively. The side portions 23b, 23c are formed outside of the side portions 3b, 3c of the pedal bracket 3. The stopper mounting member 23 is supported on the pedal bracket 3 by passing of a bolt 26 in the through-holes 23d, 23e formed in the side portions 23b, 23c of the stopper mounting member 23, and in through-holes 3h, 3i formed in the side portions 3b, 3c of the pedal bracket 3 in a state that the positions of the through-holes 23d, 23e, 3h, 3i are aligned to each other. Reference numeral 26a in FIG. 2 denotes a nut to be mounted on the bolt 26 for fixation. The clutch pedal 11 is pivotally rotated about the bolt 26 by passing of the bolt 26 in the through-hole 11a formed in the center of axis of rotation of the clutch pedal 11. As shown in FIG. 4, a stepping aid spring 28 is provided in the clutch pedal 11 in a state that the bolt 26 is passed in the stepping aid spring 28. The stepping aid spring 28 is a helical spring for exerting a torsional force. An end 28a of the stepping aid spring 28 is supported on an underside of the upper portion 3a of the pedal bracket 3, and the other end 28b thereof is bent in a certain direction so as to position on the rod attachment member 13. Thereby, the stepping aid spring 28 acts during the first half stroke of the clutch pedal 11 to aid the operation of the assist spring 8 to return the clutch pedal 11 to the initial position.

As shown in FIG. 5, a stopper 24 also functioning as a switch is attached to the stopper mounting member 23. A contact member 27 is mounted on the clutch pedal 11 at a rearward position corresponding to the stopper 24. When the contact member 27 comes into contact with the stopper 24 by pivotal rotation of the clutch pedal 11 toward the initial position, the stopper 24 detects returning of the clutch pedal 11 to the initial position by the operation of the stopper 24 as the switch. The clutch pedal 11 is pivotally rotatable by a range covering an angular position of the clutch pedal 11 shown by the solid line in FIG. 4 at which the contact member 27 comes into contact with the stopper 24 to an angular position of the clutch pedal 11 shown by the one-dot-chain line in FIG. 4 at which the contact portion 9 comes into contact with the stopper 12.

The pedal module 1 in this embodiment is assembled by integrally mounting the clutch pedal 11 and the pedal bracket 3 attached with the stopper mounting member 23 to the connecting portion 6 of the cylinder body 4 of the master cylinder 2. The pedal module 1 is fixedly attached to the dashboard 10 by directly fixedly attaching the attachment member 5 provided on the end portion of the master cylinder 2 to the dashboard 10 by the bolts (not shown), and is also fixedly attached to the instrument panel 10a by screwing the bolt (not shown) passing in the bolt receiving hole 3j formed in the upper portion 3a of the pedal bracket 3 into the instrument panel 10a. Thus, the master cylinder 2 and the pedal bracket 3 are aligned side by side in the longitudinal direction of the vehicle body without protruding in the engine room.

In the above embodiment, since the bracket or attachment member 5 provided on the end portion of the cylinder body 4 of the master cylinder 2 is fixedly attached to the dashboard 10, the cylinder body 4 can be utilized as part of a reinforcing member of the pedal module 1. This arrangement makes it possible to reduce the size of the pedal bracket 3, which contributes to production of the pedal module 1 having a reduced size and lightweight.

Further, this arrangement enables to secure latitude in mounting a hydraulic plumbing because a wider space is available around the master cylinder 2, as compared with the conventional arrangement in which the master cylinder is provided around the pedal bracket. Furthermore, since the master cylinder 2 and the pedal bracket 3 are arranged side by side in the longitudinal direction of the vehicle body, the width of the vehicle can be minimized as compared with the conventional arrangement. Further, there is no likelihood that a part that is not required to protrude in the vehicle chamber may protrude in the vehicle chamber.

According to the embodiment of the present invention, the number of parts constituting the pedal module 1 can be reduced by integrally molding the cylinder body 4 and the support portions 7a, 7b for supporting the both ends of the assist spring 8. Use of the assist spring 8 of a helical type as recited in the embodiment enables to assemble the pedal module in a smaller space, which contributes to miniaturization of the pedal module as a whole.

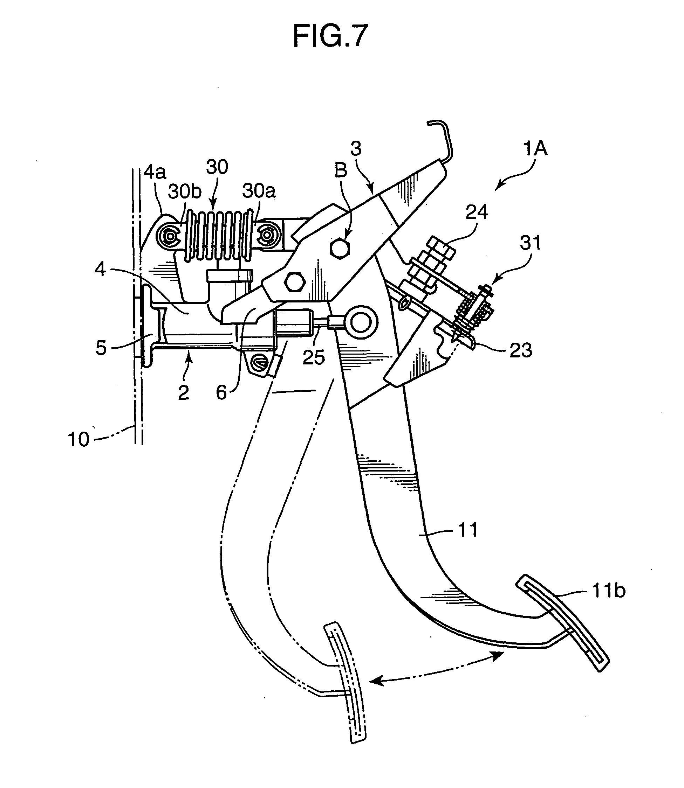

FIG. 7 is a front view of a pedal module according to a second embodiment of the present invention. It should be noted that elements in the second embodiment which are identical or equivalent to those shown in FIGS. 1 through 6 are denoted at the same reference numerals.

Referring to FIG. 7, a pedal module 1A is provided with an assist spring 30 constituted of a coil spring, in place of the assist spring 8 of a helical type. Further, the second embodiment is different from the first embodiment in that a stepping aid spring 31 constituted of a coil spring is provided in place of the stepping aid spring 28 of a helical type.

The assist spring 30 in the second embodiment has an end portion 30a which is connected to an upper portion of a clutch pedal 11 relative to the center of axis of rotation B of the clutch pedal 11 to apply an urging force rearwardly of the vehicle, and the other end portion 30b which is connected to an attachment portion 4a integrally formed with a cylinder body 4. The stepping aid spring 31 is mounted on a stopper mounting member 23 along with a stopper 24 with its axial direction aligned with an urging direction of the stepping aid spring 31.

The pedal module having the above arrangement is also applicable to the present invention. The pedal module of the second embodiment provides substantially the same effects as the first embodiment except for the effect obtained by use of the assist spring of a helical type.

In the foregoing embodiments, the inventive pedal module is applied to a clutch pedal. Alternatively, the present invention is applicable to a brake pedal, as well as the clutch pedal.

As described above, an inventive pedal module is adapted to be fixedly attached to a dashboard for separating a vehicle body of an automotive vehicle into a vehicle chamber and an engine room. The pedal module comprises: a pedal which is steppedly operated by a driver of the vehicle; a master cylinder including a cylinder body and a push rod, the push rod protruding through an opening end of the cylinder body and being reciprocatingly moved in axial directions of the cylinder body in accordance with the stepping of the driver against the pedal; and a pedal bracket which is attached to the cylinder body and adapted for pivotally mounting the pedal. The cylinder body has an attachment member on an end portion of the cylinder body opposite to the opening end in the axial direction of the cylinder body. The attachment member is fixedly attached to the dashboard.

In the above arrangement, since the attachment member provided on the end portion of the cylinder body of the master cylinder is fixedly attached to the dashboard, the cylinder body can be used as part of a reinforcing member of the pedal module. This arrangement enables to miniaturize the pedal bracket, which contributes to production of the miniaturized and lightweight pedal module as a whole. Further, as compared with the conventional arrangement of providing a master cylinder along a pedal bracket, a wider space is available around the master cylinder, which secures latitude in mounting a hydraulic plumbing.

Preferably, the master cylinder and the pedal bracket may be arranged side by side in a longitudinal direction of the vehicle body.

Unlike the conventional arrangement in which a master cylinder is mounted on a lateral portion of a pedal bracket fixedly attached to a dashboard, in this arrangement, the master cylinder and the pedal bracket are arranged side by side in the longitudinal direction of the vehicle body. As compared with the conventional arrangement, this arrangement enables to minimize the width of the vehicle body and eliminate the likelihood that unnecessary protrusions protrude in the vehicle chamber.

Further, it may be preferable to provide an assist spring for urging the pedal in a direction of assisting the stepping of the driver against the pedal, the assist spring having an end thereof supported by the pedal and the other end thereof supported by the cylinder body.

In the above arrangement, the number of parts constituting the pedal module can be reduced by integrally molding the cylinder body and the support portions of the assist spring. Use of the assist spring of a helical type enables to assemble the pedal module in a smaller space, which contributes to the miniaturization of the pedal module as a whole.

This application is based on Japanese Patent Application No. 2003-358298 filed on October 17, 2003, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A pedal module adapted to be fixedly attached to a dashboard for separating a vehicle body of an automotive vehicle into a vehicle chamber and an engine room, the pedal module comprising:
a pedal (11) which is steppedly operated by a driver of the vehicle;
a master cylinder (2) including a cylinder body (4) and a push rod (25), the push rod (25) protruding through an opening end of the cylinder body (4) and being reciprocatingly moved in axial directions of the cylinder body (4) in accordance with the stepping of the driver against the pedal (11); and
a pedal bracket (3) which is attached to the cylinder body (4) and adapted for pivotally mounting the pedal (11), wherein
the cylinder body (4) has an attachment member (5) on an end portion of the cylinder body (4) opposite to the opening end in the axial direction of the cylinder body (4), the attachment member (5) being fixedly attached to the dashboard (10).

2. The pedal module according to Claim 1, wherein the master cylinder (2) and the pedal bracket (3) are arranged side by side in a longitudinal direction of the vehicle body.

3. The pedal module according to Claim 1 or 2, further comprising an assist spring (8) for urging the pedal (11) in a direction of assisting the stepping of the driver against the pedal (11), the assist spring (8) having an end thereof supported by the pedal (11) and the other end thereof supported by the cylinder body (4).
